(19) Europäisches Patentamt / European Patent Office / Office européen des brevets

(11) **EP 4 478 084 A1**

(12) **EUROPEAN PATENT APPLICATION**
published in accordance with Art. 153(4) EPC

(43) Date of publication:
**18.12.2024 Bulletin 2024/51**

(21) Application number: **23752832.8**

(22) Date of filing: **06.02.2023**

(51) International Patent Classification (IPC):
**G01S 7/486** (2020.01)  **G01C 3/06** (2006.01)
**G01S 7/484** (2006.01)  **G01S 17/931** (2020.01)

(52) Cooperative Patent Classification (CPC):
**G01C 3/06; G01S 7/484; G01S 7/486; G01S 17/931**

(86) International application number:
**PCT/JP2023/003812**

(87) International publication number:
**WO 2023/153368 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2022 JP 2022018762**

(71) Applicant: **KOITO MANUFACTURING CO., LTD.
Minato-ku, Tokyo, 108-8711 (JP)**

(72) Inventors:
• **ITO Yoshiro
Shizuoka-shi, Shizuoka 424-8764 (JP)**

• **HAYASHI Yukio
Shizuoka-shi, Shizuoka 424-8764 (JP)**
• **SONE Hidemichi
Shizuoka-shi, Shizuoka 424-8764 (JP)**
• **MOTOHASHI Kazuya
Shizuoka-shi, Shizuoka 424-8764 (JP)**
• **HARUSE Yuta
Shizuoka-shi, Shizuoka 424-8764 (JP)**

(74) Representative: **Hoffmann Eitle
Patent- und Rechtsanwälte PartmbB
Arabellastraße 30
81925 München (DE)**

(54) **MEASUREMENT APPARATUS**

(57) A measurement apparatus (1) includes: a light emitting unit (10) configured to emit measurement light toward a measurement area; a first light receiving unit (20) configured to receive reflected light from the measurement area; a control unit (40) configured to control the light emitting unit (10) and the first light receiving unit (20) and calculate a distance to an object (50) in the measurement area based on a light receiving result of the first light receiving unit (20); and a second light receiving unit (30) configured to receive, among pieces of light from the measurement area, light having a wavelength different from that of the measurement light.

FIG. 1

EP 4 478 084 A1

## Description

TECHNICAL FIELD

The present invention relates to a measurement apparatus.

BACKGROUND ART

A measurement apparatus configured to measure a distance to an object based on emitting light and receiving reflected light reflected back from the object is known (for example, see Patent Literature 1).

CITATION LIST

PATENT LITERATURE

Patent Literature 1: JP2021-152536A

SUMMARY OF INVENTION

TECHNICAL PROBLEM

The light received by the measurement apparatus includes not only reflected light but also ambient light (noise) such as sunlight and light of an oncoming vehicle. Since the measurement apparatus described above can not distinguish such light, the detection performance may deteriorate at the time of light reception due to noise.

An object of the present invention is to improve the detection performance.

SOLUTION TO PROBLEM

One of the present inventions for achieving the above object is a measurement apparatus including: a light emitting unit configured to emit measurement light toward a measurement area; a first light receiving unit configured to receive reflected light from the measurement area; a control unit configured to control the light emitting unit and the first light receiving unit and calculate a distance to an object in the measurement area based on a light receiving result of the first light receiving unit; and a second light receiving unit configured to receive, among pieces of light from the measurement area, light having a wavelength different from that of the measurement light.

ADVANTAGEOUS EFFECTS OF INVENTION

According to the present invention, the detection performance can be improved.

BRIEF DESCRIPTION OF DRAWINGS

[FIG. 1] FIG. 1 is an overall configuration diagram including a measurement apparatus 1 according to the present embodiment.
[FIG. 2] FIG. 2 is an explanatory diagram of the configuration of a first light receiving unit 20 shown in FIG. 1.
[FIG. 3A] FIG. 3A is an explanatory diagram of a signal processing unit 462 shown in FIG. 1.
[FIG. 3B] FIG. 3B is a diagram showing the output of an addition unit 462A and the output of a comparison unit 462B shown in FIG. 1.
[FIG. 3C] FIG. 3C is an explanatory diagram of a histogram generated by a histogram generation unit 462C shown in FIG. 3A and a time of flight TOF detected based on the histogram.
[FIG. 4] FIG. 4 is a flow diagram showing processing executed by a control unit 40 according to a first embodiment.
[FIG. 5] FIG. 5 is a flow diagram showing a modification of the processing executed by the control unit 40 shown in FIG. 1.
[FIG. 6] FIG. 6 is a flow diagram showing another modification of the processing executed by the control unit 40 shown in FIG. 1.
[FIG. 7] FIG. 7 is an explanatory diagram of the configuration of a second light receiving unit 30 of the measurement apparatus 1 according to a second embodiment.
[FIG. 8] FIG. 8 is an explanatory diagram of a spectrum of a white LED.
[FIG. 9] FIG. 9 is a flow diagram showing the processing of the control unit 40 according to the second embodiment.
[FIG. 10] FIG. 10 is a flow diagram showing a modification of the processing of the control unit 40 according to the second embodiment.

DESCRIPTION OF EMBODIMENTS

Hereinafter, embodiments of the present invention will be described with reference to the drawings. In the following description, the same or similar configurations are denoted by the same reference signs, and the redundant description thereof may be omitted.

(First Embodiment)

<<Overview of measurement apparatus>>

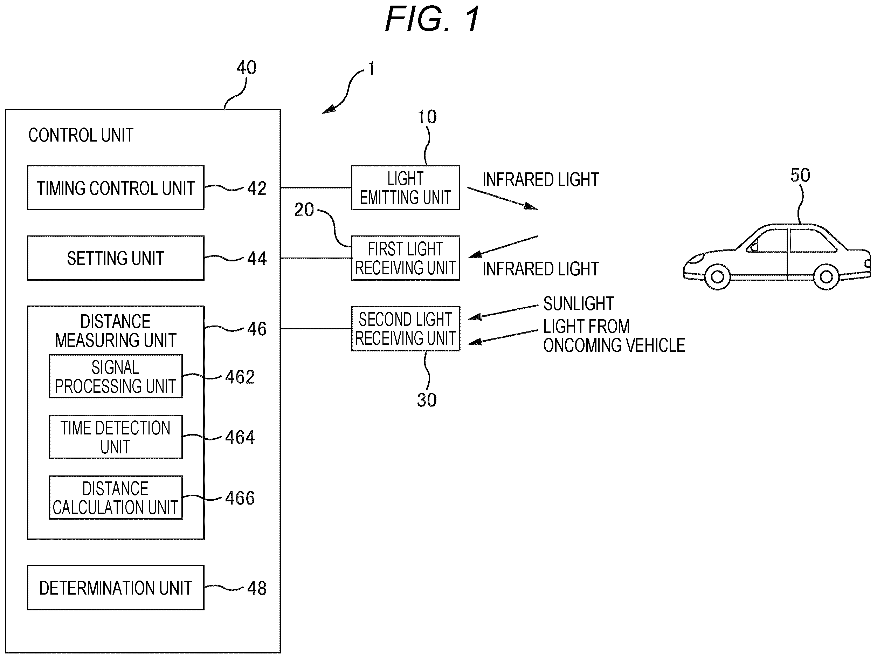

FIG. 1 is an overall configuration diagram including a measurement apparatus 1 according to the present embodiment.

The measurement apparatus 1 shown in FIG. 1 is a measurement apparatus having a function as so-called light detection and ranging and laser imaging detection and ranging (LiDAR). The measurement apparatus 1 measures the distance to an object 50 by a time of flight (TOF) method by emitting measurement light (infrared light in the present embodiment) and measuring the time until the measurement light is reflected back from the object 50. The measurement apparatus 1 according to the present embodiment is mounted on a vehicle, and the object 50 is another vehicle (an oncoming vehicle). The light (the return light) that is reflected back from the object 50 is also referred to as "reflected light".

As shown in FIG. 1, the measurement apparatus 1 includes a light emitting unit 10, a first light receiving unit 20, a second light receiving unit 30, and a control unit 40.

The light emitting unit 10 emits measurement light (here, infrared light) to a space (hereinafter, a measurement area) to be measured. The light emitting unit 10 includes, for example, a surface emitting element array (a VCSEL array) including a plurality of surface emitting type laser elements (vertical cavity surface emitting lasers (VCSELs)) arranged one-dimensionally or two-dimensionally, and a light projection optical system (both not shown) such as a lens that adjusts distribution of emitted light.

The first light receiving unit 20 receives reflected light (infrared light) from the object 50 in the measurement area. In the first light receiving unit 20 according to the present embodiment, a single photon avalanche diode (SPAD) is used as a sensor (a light receiving element) that detects light. Details of the first light receiving unit 20 will be described later.

The second light receiving unit 30 receives, among pieces of the light from the measurement area, light (for example, ambient light such as sunlight or light from an oncoming vehicle) having a wavelength different from that of the reflected light.

The control unit 40 controls the measurement apparatus 1. The control unit 40 is implemented by a hardware configuration such as an element and a circuit. Examples of the element include a memory and a CPU. The control unit 40 implements a predetermined function by the CPU executing a program stored in the memory. FIG. 1 shows various functions implemented by the control unit 40. The control unit 40 includes a timing control unit 42, a setting unit 44, a distance measuring unit 46, and a determination unit 48.

The timing control unit 42 controls various timings such as a timing at which the light emitting unit 10 emits light.

The setting unit 44 executes various settings of the measurement apparatus 1. For example, the intensity of the measurement light emitted from the light emitting unit 10, the integration number of times when a histogram is created, a threshold, and the like are set.

The distance measuring unit 46 measures the distance to the object 50. The distance measuring unit 46 includes a signal processing unit 462, a time detection unit 464, and a distance calculation unit 466. The signal processing unit 462 processes the output signal of the first light receiving unit 20. The time detection unit 464 detects the arrival time (the time of flight of light: TOF) from when the light emitting unit 10 emits the measurement light until the reflected light reaches the first light receiving unit 20. The distance calculation unit 466 calculates the distance to the object 50 based on the time of flight TOF of the light.

The determination unit 48 determines a situation such as the presence or approach of an oncoming vehicle based on the light receiving result of the second light receiving unit 30. The determination of the determination unit 48 will be described later.

<<Regarding First Light Receiving Unit 20>>

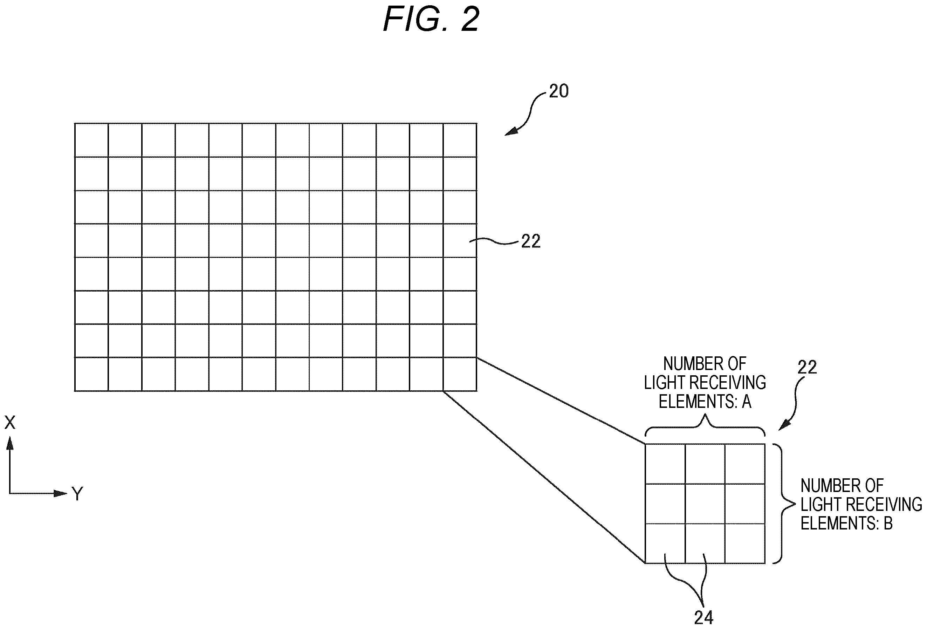

FIG. 2 is an explanatory diagram of the configuration of the first light receiving unit 20 shown in FIG. 1.

As shown in FIG. 2, the first light receiving unit 20 includes a plurality of pixels 22 arranged two-dimensionally. Each pixel, that is, one pixel 22 includes a plurality of light receiving elements 24. Here, each pixel 22 includes nine SPADs arranged as the light receiving elements 24, three SPADs arranged in the X direction (for example, the horizontal direction) and three SPADs arranged in the Y direction (for example, the vertical direction). The light receiving element 24 implemented by the SPAD outputs a pulse signal when detecting light particles (hereinafter also referred to as photons).

<<Regarding Histogram and TOF>>

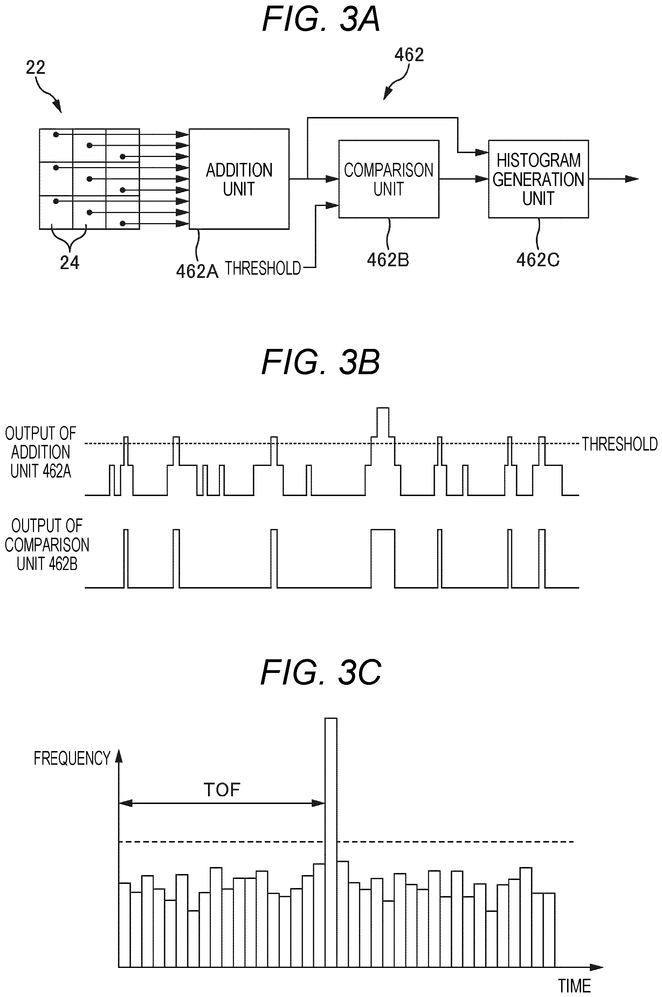

FIG. 3A is an explanatory diagram of the signal processing unit 462 shown in FIG. 1. FIG. 3B is a diagram showing an example of the output of an addition unit 462A and the output of a comparison unit 462B shown in FIG. 1. The signal processing unit 462 includes the addition unit 462A, the comparison unit 462B, and a histogram generation unit 462C. Here, the signal processing unit 462 generates a histogram used in a time correlated single photon counting (TCSPC) method based on the output signal of each pixel 22 of the first light receiving unit 20.

The addition unit 462A adds output signals of the plurality of light receiving elements 24 (SPADs) constituting the pixel 22. The addition unit 462A may adjust (shape) the pulse width output by the light receiving element 24 and then add the output signals of the plurality of light receiving elements 24. The comparison unit 462B compares the output signal of the addition unit 462A with a threshold, and outputs a signal when the output signal of the addition unit 462A is equal to or greater than the threshold. The timing at which the comparison unit 462B outputs a signal is considered to be the timing at which the light receiving element 24 of the first light receiving unit 20 detects light.

The photons of the ambient light are temporally and randomly incident on each of the light receiving elements 24. On the other hand, the photons of the reflected light are incident on each of the light receiving elements 24 at a predetermined delay time (a time of flight depending on the distance to the object 50) after the light is emitted. Therefore, when the photons of the ambient light are temporally and randomly incident on the light receiving element 24, the chance is low that the output signal of the addition unit 462A becomes equal to or greater than the threshold. On the other hand, when the photons of the reflected light are incident on the light receiving element 24, since the plurality of light receiving elements 24 constituting the pixel 22 simultaneously detect the photons, the chance is high that the output signal of the addition unit 462A becomes equal to or greater than the threshold. Therefore, the addition unit 462A adds the output signals of the plurality of light receiving elements 24, and the comparison unit 462B compares the output signal of the addition unit 462A with the threshold. Accordingly, it is possible to measure the time at which the reflected light is considered to be detected in the light receiving element 24.

When the light receiving element 24 detects the photons once, a hold-off-time (a dead-time) occurs. However, the addition unit 462A adds the output signals of the plurality of light receiving elements 24 (SPADs), so that it is possible to reduce the influence of the occurrence of the hold-off-time.

FIG. 3C is an explanatory diagram of a histogram generated by the histogram generation unit 462C shown in FIG. 3A and a time of flight TOF detected based on the histogram. In FIG. 3C, the horizontal axis represents time, and the vertical axis represents frequency (number of times). The histogram generation unit 462C generates a histogram by repeatedly measuring the time when the light receiving element 24 of each pixel 22 of the first light receiving unit 20 detects light based on the output of the comparison unit 462B, and incrementing the frequency (the number of times) associated with the time. When incrementing the frequency (the number of times), the histogram generation unit 462C may increase the number corresponding to the output signal (the addition value) of the addition unit 462A instead of increasing the number by one.

As described above, the setting unit 44 (see FIG. 1) sets in advance the integration number of times for generating the histogram. The timing control unit 42 causes the light emitting unit 10 to emit the measurement light a plurality of times according to the set integration number of times. For one time of emission of the measurement light from the light emitting unit 10, a signal is output once or a plurality of times from the addition unit 462A. The histogram generation unit 462C increments the frequency (the number of times) according to the output signal of the comparison unit 462B until the set integration number of times is reached, thereby generating a histogram.

After the histogram is generated, the time detection unit 464 of the distance measuring unit 46 detects the time of flight TOF from when light is emitted until the reflected light reaches based on the histogram. As shown in FIG. 3C, the time detection unit 464 of the distance measuring unit 46 detects the time (the time of flight TOF of light) corresponding to the peak of the frequency of the histogram. The distance calculation unit 466 of the distance measuring unit 46 calculates the distance to the object 50 based on the time of flight TOF. Since the light travels twice the distance to the object during the time of flight TOF, when the speed of the light is Co and the time of flight TOF is Tf, the distance L to the object is explained as follows:

$$L = (Tf \times Co)/2 \cdots (1).$$

The distance calculation unit 466 calculates the distance to the object 50 according to Equation (1).

<<Regarding Second Light Receiving Unit 30>>

The second light receiving unit 30 shown in FIG. 1 receives light having a wavelength different from that of the reflected light (the infrared light) as described above. Therefore, the second light receiving unit 30 includes a sensor (for example, a photodiode) capable of detecting light (for example, sunlight) having a wavelength different from that of the reflected light (the infrared light). The sensor (not shown) of the second light receiving unit 30 is provided in the same direction as the light receiving surface of the first light receiving unit 20, and receives light from the measurement area according to an instruction from the control unit 40.

<<Regarding Processing Executed by Control Unit 40>>

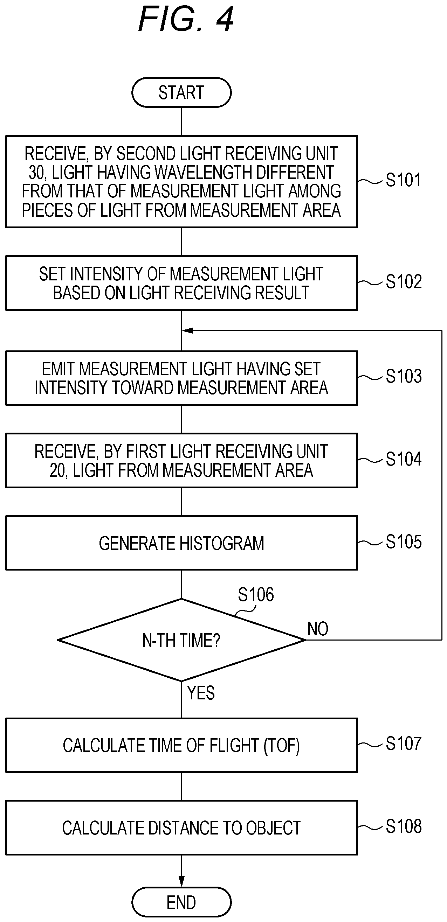

FIG. 4 is a flow diagram showing processing executed by the control unit 40 according to a first embodiment.

First, the timing control unit 42 of the control unit 40 causes the second light receiving unit 30 to receive, among pieces of the light from the measurement area, light (ambient light, hereinafter referred to as sunlight) having a wavelength different from that of the measurement light (S101). Then, the setting unit 44 of the control unit 40 sets the intensity of the measurement light (the infrared light) emitted by the light emitting unit 10 based on the light receiving result (S102). For example, the intensity of the measurement light is set to increase as the intensity of the light of the sunlight increases.

Next, the timing control unit 42 controls the light emitting unit 10 to emit the measurement light (the infrared light) having the intensity set in step S102 toward the measurement area (S103). The timing control unit 42 causes the first light receiving unit 20 to receive the light (including the reflected light and the sunlight) from the measurement area (S104). The timing control unit 42 causes the first light receiving unit 20 to repeatedly receive light for one time of light emission.

The histogram generation unit 462C of the signal processing unit 462 in the distance measuring unit 46 generates a histogram indicating the frequency for each time based on the output (the comparison result) of the comparison unit 462B obtained by comparing the output (the addition result) of the addition unit 462A with a predetermined threshold (S 105).

When the integration number of times is not the n-th time (that is, less than n) (No in step S106), the control unit 40 returns to step S103 and causes the light emitting unit 10 to emit the measurement light again.

On the other hand, when the integration number of times is the n-th time in step S 106 (Yes in step S106), the time detection unit 464 of the distance measuring unit 46 obtains the peak of the generated histogram and calculates the time (the time of flight TOF) from the timing of light emission to the peak (S 107).

Next, the distance calculation unit 466 of the distance measuring unit 46 calculates the distance to the object according to Equation (1) using the time of flight TOF (S108).

As described above, the setting unit 44 of the control unit 40 of the measurement apparatus 1 according to the present embodiment sets the intensity of the measurement light emitted by the light emitting unit 10 based on the light receiving result of the second light receiving unit 30. Accordingly, when the amount of ambient light is large, the detection accuracy can be maintained by increasing the intensity of the measurement light. When the amount of ambient light is small, the power consumption can be reduced by reducing the intensity of the measurement light.

<Modification 1>

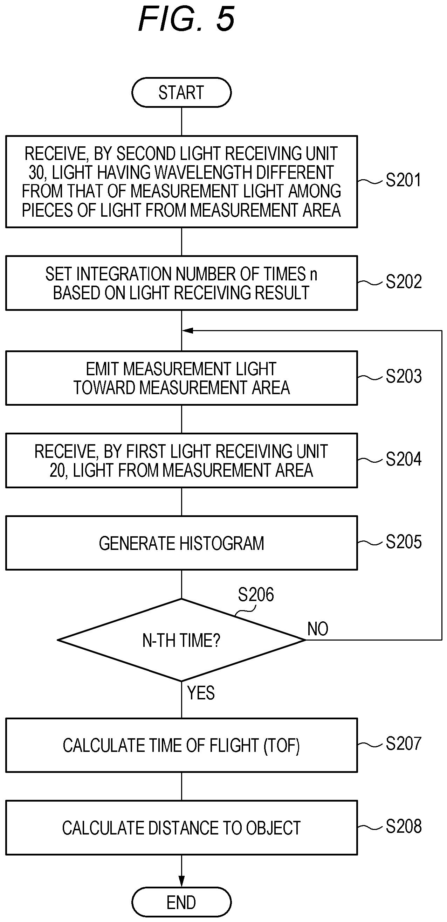

FIG. 5 is a flow diagram showing a modification 1 of the processing executed by the control unit 40 shown in FIG. 1. The configuration of the measurement apparatus 1 is the same as that of the above embodiment. The setting unit 44 according to the modification 1 determines the integration number of times n based on the light receiving result of the second light receiving unit 30.

First, the timing control unit 42 of the control unit 40 causes the second light receiving unit 30 to receive, among pieces of the light from the measurement area, light (ambient light, for example, sunlight) having a wavelength different from that of the measurement light (S201). Then, the setting unit 44 of the control unit 40 sets (determines) the integration number of times n based on the light receiving result (S202). For example, the setting unit 44 sets the integration number of times n to increase as the ambient light is stronger.

Next, the timing control unit 42 controls the light emitting unit 10 to emit the measurement light (the infrared light) having a predetermined intensity toward the measurement area (S203). Further, the timing control unit 42 causes the first light receiving unit 20 to receive the light (including the infrared light and the sunlight) from the measurement area (S204). The timing control unit 42 causes the first light receiving unit 20 to repeatedly receive light for one time of light emission.

The histogram generation unit 462C of the signal processing unit 462 in the distance measuring unit 46 generates a histogram based on the output (the comparison result) of the comparison unit 462B obtained by comparing the output (the addition result) of the addition unit 462A with the predetermined threshold (S205).

When the integration number of times is not the n-th time (that is, less than n) (No in step S206), the control unit 40 returns to step S203 and causes the light emitting unit 10 to emit the measurement light again.

On the other hand, when the integration number of times is the n-th time (Yes in step S206), the time detection unit 464 of the distance measuring unit 46 obtains the peak of the generated histogram and calculates the time of flight TOF which is a time from the timing of light emission to the peak (S207).

Next, the distance calculation unit 466 of the distance measuring unit 46 calculates the distance to the object according to Equation (1) using the time of flight TOF (S208).

As described above, the setting unit 44 according to the modification 1 sets the integration number of times n based on the light receiving result of the second light receiving unit 30. Accordingly, the integration number of times can be optimized according to the situation of ambient light. For example, when the amount of ambient light is large, the detection accuracy can be maintained by setting the integration number of times n to be large. When the amount of ambient light is small, the measurement speed can be improved by setting the integration number of times n to be small.

<Modification 2>

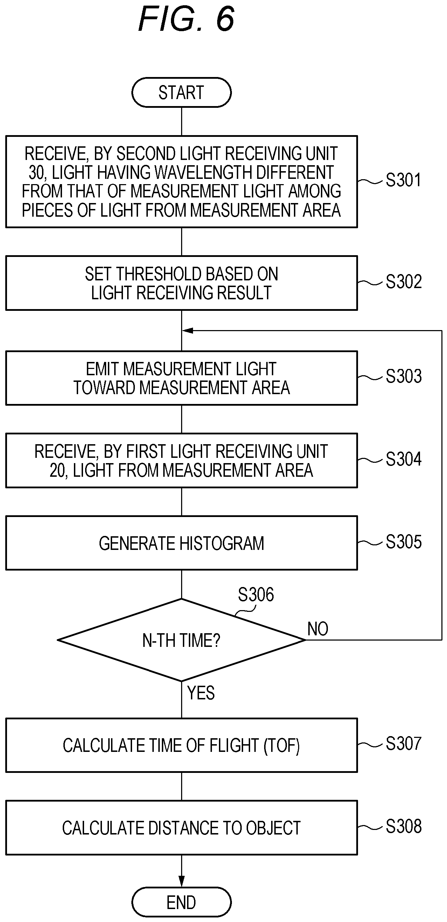

FIG. 6 is a flow diagram showing a modification 2 of the processing executed by the control unit 40 shown in FIG. 1. The configuration of the measurement apparatus 1 is the same as that of the above embodiment. In the modification 2, a threshold (see FIGS. 3A and 3B) to be compared with the output of the addition unit 462A by the comparison unit 462B is set based on the light receiving result of the second light receiving unit 30.

First, the timing control unit 42 of the control unit 40 causes the second light receiving unit 30 to receive, among pieces of the light from the measurement area, light (ambient light, for example, sunlight) having a wavelength different from that of the measurement light (S301). Then, the setting unit 44 of the control unit 40 determines the threshold based on the light receiving result (S302).

When the threshold is a small value, the histogram is greatly affected by the ambient light when the amount of ambient light is large, and thus the detection accuracy of the arrival time of light may decrease. On the other hand, when the threshold is a large value, it may take time to generate the histogram of the predetermined integration number of times. Therefore, in the present embodiment, based on the light receiving result of the second light receiving unit 30, when the amount of ambient light is large, the setting unit 44 sets the threshold to a large value. Accordingly, the detection accuracy can be maintained. Based on the light receiving result of the second light receiving unit 30, when the amount of ambient light is small, the setting unit 44 sets the threshold to a small value. Accordingly, the generation speed of the histogram can be increased.

Next, the timing control unit 42 controls the light emitting unit 10 to emit the measurement light (the infrared light) having a predetermined intensity to the measurement area (S303). Further, the timing control unit 42 causes the first light receiving unit 20 to receive the light (including the infrared light and the sunlight) from the measurement area (S304). The timing control unit 42 causes the first light receiving unit 20 to repeatedly receive light for one time of light emission.

The histogram generation unit 462C of the signal processing unit 462 in the distance measuring unit 46 generates a histogram based on the output (the comparison result) of the comparison unit 462B obtained by comparing the addition result of the addition unit 462A with the threshold set in step S302 (S305).

When the integration number of times is not the n-th time (that is, less than n) (No in step S306), the control unit 40 returns to step S303 and causes the light emitting unit 10 to emit the measurement light again.

On the other hand, when the integration number of times is the n-th time (Yes in step S306), the time detection unit 464 of the distance measuring unit 46 obtains the peak of the generated histogram and calculates the time of flight TOF which is a time from the timing of light emission to the peak (S307).

Next, the distance calculation unit 466 of the distance measuring unit 46 calculates the distance to the object 50 according to Equation (1) using the time of flight TOF (S308).

As described above, the setting unit 44 according to the modification 2 sets the threshold for generating the histogram based on the light receiving result of the second light receiving unit 30. Accordingly, when the amount of ambient light is large, the detection accuracy can be maintained by setting the threshold to a large value. When the amount of ambient light is small, the generation speed of the histogram can be increased by setting the threshold to a small value.

(Second Embodiment)

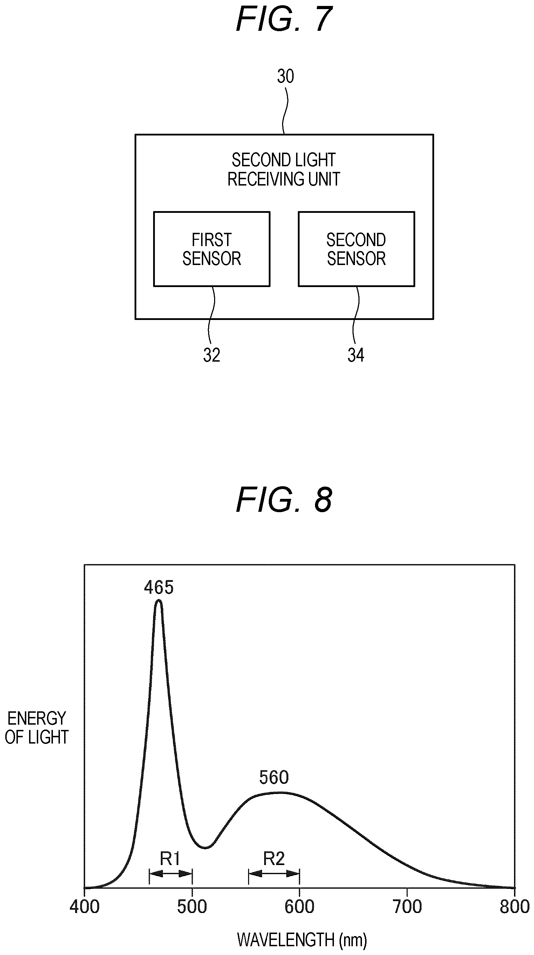

FIG. 7 is an explanatory diagram of the configuration of the second light receiving unit 30 of the measurement apparatus 1 according to a second embodiment.

The second light receiving unit 30 according to the second embodiment includes two sensors (a first sensor 32 and a second sensor 34) having different detection ranges as sensors that receive light having a wavelength different from that of the measurement light (the infrared light) emitted by the light emitting unit 10. As will be described later, the first sensor 32 is a sensor capable of detecting blue light, and the second sensor 34 is a sensor capable of detecting yellow light.

The object 50 (hereinafter, referred to as an oncoming vehicle) according to the second embodiment includes a white LED as a light source of a lamp (for example, a low beam, a daytime running lamp (DRL), or the like) of the vehicle. The white LED is formed of a combination of a blue LED and a yellow phosphor. That is, the light generated by the blue LED is emitted through the yellow phosphor. Accordingly, white light is emitted. The second light receiving unit 30 of the measurement apparatus 1 detects the light emitted from the white LED of the oncoming vehicle.

FIG. 8 is an explanatory diagram of a spectrum of a white LED. In FIG. 8, the horizontal axis represents the wavelength, and the vertical axis represents the energy of light.

As shown in FIG. 8, the spectrum of the white LED includes two peaks of a peak at a wavelength of approximately 465 nm and a peak at a wavelength of approximately 560 nm. The peak at approximately 465 nm is the center wavelength of the light emitted from the blue LED, and the peak at approximately 560 nm is the center wavelength of the light emitted from the yellow phosphor.

A region R1 shown in FIG. 8 is a detectable region of the first sensor 32 capable of detecting blue light. The region R2 is a detectable region of the second sensor 34 capable of detecting yellow light. As shown in FIG. 8, the first sensor 32 can detect light having a wavelength of 465 nm, and the second sensor 34 can detect light having a wavelength of 560 nm. The wavelength of the region R1 that can be detected by the first sensor 32 corresponds to a "first wavelength", and the wavelength of the region R2 that can be detected by the second sensor 34 corresponds to a "second wavelength".

By providing the first sensor 32 and the second sensor 34 having different detection ranges, the presence of the object 50 (the oncoming vehicle) can be determined based on the detection results (the light intensity ratios) of the first sensor 32 and the second sensor 34.

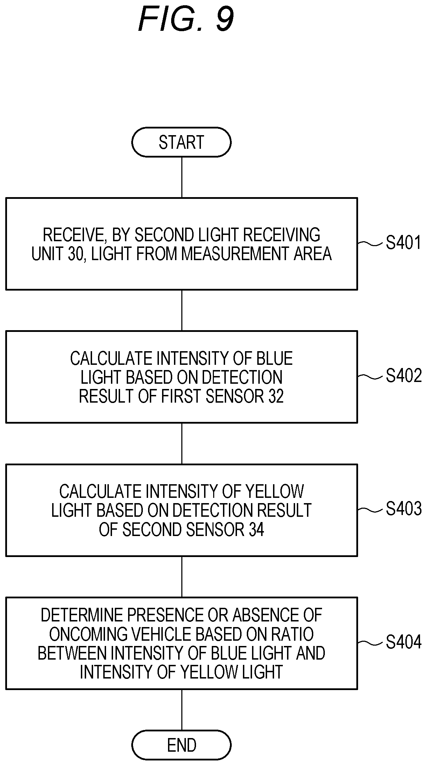

FIG. 9 is a flow diagram showing the processing of the control unit 40 according to the second embodiment.

The timing control unit 42 of the control unit 40 causes the second light receiving unit 30 to receive the light from the measurement area (S401). The control unit 40 detects the intensity of the blue light, that is, the light having the center wavelength of 465 nm, based on the light receiving result of the first sensor 32 of the second light receiving unit 30 (S402).

The control unit 40 detects the intensity of the yellow light, that is, the light having the center wavelength of 560 nm, based on the light receiving result of the second sensor 34 of the second light receiving unit 30 (S403).

Next, the determination unit 48 of the control unit 40 determines the presence or absence of the oncoming vehicle based on the ratio between the intensity of the blue light and the intensity of the yellow light (S404). For example, when the intensity of the blue light is higher than the intensity of the yellow light, the determination unit 48 determines that the light emitted from the white LED of the oncoming vehicle is present, that is, the oncoming vehicle is present. When the intensity of the yellow light is higher than the intensity of the blue light (for example, sunlight), the determination unit 48 determines that no light emitted from the oncoming vehicle is present, that is, no oncoming vehicle is present.

As described above, the second light receiving unit 30 of the measurement apparatus 1 according to the second embodiment includes the first sensor 32 capable of detecting the blue light and the second sensor 34 capable of detecting the yellow light. Accordingly, the determination unit 48 can determine the presence or absence of the oncoming vehicle (the object 50) based on the ratio between the intensity of the blue light detected by the first sensor 32 and the intensity of the yellow light detected by the second sensor 34.

<Modification of Second Embodiment>

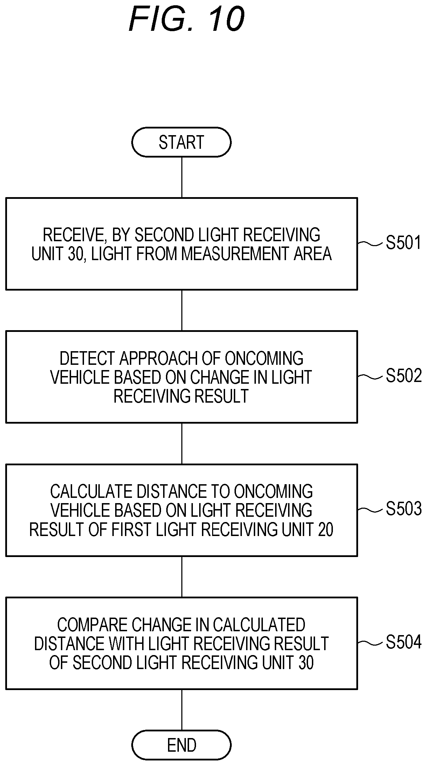

FIG. 10 is a flow diagram showing a modification of the processing of the control unit 40 according to the second embodiment. In the modification of the second embodiment, the control unit 40 of the measurement apparatus 1 detects the approach of an oncoming vehicle based on the detection result of the second light receiving unit 30.

First, the control unit 40 causes the first sensor 32 and the second sensor 34 of the second light receiving unit 30 to receive the light from the measurement area (S501). Here, similarly to the above embodiment, the first sensor 32 receives the blue light, and the second sensor 34 receives the yellow light. The presence or absence of the oncoming vehicle (the object 50) can be detected according to the light receiving result.

The control unit 40 detects the approach of the oncoming vehicle based on the change in the light receiving result (the light receiving amount) of the second light receiving unit 30 with the passage of time (S502). For example, when an oncoming vehicle approaches, the light receiving amount of the first sensor 32 and the light receiving amount of the second sensor 34 both increase with the passage of time. Accordingly, the determination unit 48 of the control unit 40 determines that the oncoming vehicle is approaching based on the change in the light receiving result of the second light receiving unit 30.

Similarly to the first embodiment, the distance measuring unit 46 of the control unit 40 calculates the distance to the oncoming vehicle (the object 50) based on the light receiving result of the first light receiving unit 20 (S503).

Then, the control unit 40 compares the change in the distance (see the first embodiment) to the oncoming vehicle calculated based on the detection result of the first light receiving unit 20 with the change in the light receiving result of the second light receiving unit 30 (S504). Accordingly, the reliability of the measurement of the distance to the oncoming vehicle (the object 50) can be improved.

(Summary)

The measurement apparatus 1 according to the present embodiment has been described above. The measurement apparatus 1 includes the light emitting unit 10, the first light receiving unit 20, the second light receiving unit 30, and the control unit 40. The light emitting unit 10 emits measurement light (infrared light) toward the measurement area. The first light receiving unit 20 receives the reflected light from the measurement area, that is, the measurement light reflected by the object 50. The control unit 40 controls the light emitting unit 10 and the first light receiving unit 20, and calculates the distance to the object 50 in the measurement area based on the light receiving result of the first light receiving unit 20. The second light receiving unit 30 receives light having a wavelength different from that of the measurement light among pieces of the light from the measurement area. Accordingly, the detection performance can be improved.

The control unit 40 calculates the distance to the object 50 based on the light receiving result of the second light receiving unit 30. Accordingly, the influence of ambient light (sunlight or the like) can be reduced, and the measurement accuracy can be improved.

Specifically, the setting unit 44 according to the first embodiment sets the intensity of the measurement light emitted from the light emitting unit 10 based on the light receiving result of the second light receiving unit 30. Then, the control unit 40 calculates the distance based on the light receiving result of the first light receiving unit 20 in response to the light emitting unit 10 emitting the measurement light having the intensity. In this way, when the amount of ambient light is large, the detection accuracy can be maintained by increasing the intensity of the measurement light. When the amount of ambient light is small, the power consumption can be reduced by reducing the intensity of the measurement light.

The setting unit 44 according to the modification 1 of the first embodiment determines the integration number of times n based on the light receiving result of the second light receiving unit 30. Then, the control unit 40 causes the first light receiving unit 20 to receive the reflected light by the determined integration number of times n, and calculates the distance based on the light receiving result of the first light receiving unit 20 in accordance with the integration number of times n. Accordingly, when the amount of ambient light is large, the detection accuracy can be maintained by setting the integration number of times n to be large. When the amount of ambient light is small, the measurement speed can be improved by setting the integration number of times n to be small.

The distance measuring unit 46 of the control unit 40 includes the addition unit 462A, the comparison unit 462B, and the histogram generation unit 462C. The addition unit 462A adds the outputs of the plurality of light receiving elements 24, and the comparison unit 462B compares the output of the addition unit 462A with a threshold. The histogram generation unit 462C generates a histogram based on the comparison result of the comparison unit 462B. The time detection unit 464 detects a time of flight TOF which is an arrival time of light based on the peak of the histogram. In such a configuration, the setting unit 44 according to the modification 2 of the first embodiment sets the threshold based on the light receiving result of the second light receiving unit 30. Accordingly, when the amount of ambient light is large, the detection accuracy can be maintained by setting the threshold to a large value. When the amount of ambient light is small, the generation speed of the histogram can be increased by setting the threshold to a small value.

The control unit 40 according to the second embodiment determines the presence or absence of the oncoming vehicle (the object 50) based on the light receiving result of the second light receiving unit 30. Specifically, the second light receiving unit 30 according to the second embodiment includes a first sensor 32 and a second sensor 34 that can detect light having different wavelengths. The determination unit 48 of the control unit 40 determines the presence or absence of the oncoming vehicle based on the ratio between the intensity of light based on the detection result of the first sensor 32 and the intensity of light based on the detection result of the second sensor 34. Accordingly, the detection performance for the oncoming vehicle can be improved.

The first sensor 32 can detect blue light (light having a wavelength of 465 nm), and the second sensor 34 can detect yellow light (light having a wavelength of 560 nm). Accordingly, the light of the white LED of the oncoming vehicle can be detected.

The control unit 40 according to the modification of the second embodiment detects approach of an oncoming vehicle based on a change in the light receiving result of the second light receiving unit 30. Accordingly, the approach of the oncoming vehicle can be detected based on the light receiving result of the second light receiving unit 30.

Further, the control unit 40 according to the modification of the second embodiment compares the change in the calculated distance with the change in the light receiving result of the second light receiving unit 30 based on the light receiving result of the first light receiving unit 20. Accordingly, the reliability of the distance measurement can be improved.

The above embodiments are intended to facilitate understanding of the present invention, and are not to be construed as limiting the present invention. It is needless to say that the present invention can be modified or improved without departing from the gist thereof, and equivalents thereof are included in the present invention.

The present application is based on a Japanese patent application No. 2022-018762 filed on February 9, 2022, and the contents thereof are incorporated herein by reference.

**Claims**

1. A measurement apparatus comprising:

   a light emitting unit configured to emit measurement light toward a measurement area;
   a first light receiving unit configured to receive reflected light from the measurement area;
   a control unit configured to control the light emitting unit and the first light receiving unit and calculate a distance to an object in the measurement area based on a light receiving result of the first light receiving unit; and
   a second light receiving unit configured to receive, among pieces of light from the measurement area, light having a wavelength different from that of the measurement light.

2. The measurement apparatus according to claim 1, wherein the control unit is configured to calculate the distance based on a light receiving result of the second light receiving unit.

3. The measurement apparatus according to claim 2, wherein the control unit is configured to:

   set an intensity of the measurement light emitted from the light emitting unit based on the light receiving result of the second light receiving unit; and
   calculate the distance based on the light receiving result of the first light receiving unit in response to emission of the measurement light having the intensity in accordance with the light receiving result of the second light receiving unit.

4. The measurement apparatus according to claim 2, wherein the control unit is configured to:

   determine an integration number of times based on the light receiving result of the second light receiving unit;
   cause the first light receiving unit to receive the reflected light at the determined integration number of times; and
   calculate the distance based on the light receiving result of the first light receiving unit in accordance with the integration number of times.

5. The measurement apparatus according to claim 2,

wherein the first light receiving unit comprises a plurality of light receiving elements, and wherein the control unit comprises:

an addition unit configured to add outputs of the plurality of light receiving elements; a comparison unit configured to compare an addition result of the addition unit with a threshold; a histogram generation unit configured to generate a histogram based on a comparison result of the comparison unit; and a time detection unit configured to detect an arrival time of light based on a peak of the histogram, and

wherein the control unit is configured to set the threshold based on the light receiving result of the second light receiving unit.

6. The measurement apparatus according to claim 1, wherein the control unit is configured to determine presence or absence of an oncoming vehicle based on a light receiving result of the second light receiving unit.

7. The measurement apparatus according to claim 6,

wherein the second light receiving unit comprises a first sensor configured to detect light of a first wavelength and a second sensor configured to detect light of a second wavelength different from the first wavelength, and wherein the control unit is configured to determine the presence or absence of the oncoming vehicle based on a ratio between an intensity of light of the first wavelength based on a detection result of the first sensor and an intensity of light of the second wavelength based on a detection result of the second sensor.

8. The measurement apparatus according to claim 7,

wherein the first sensor is configured to detect light having a wavelength of 465 nm, and wherein the second sensor is configured to detect light having a wavelength of 560 nm.

9. The measurement apparatus according to claim 7 or 8,

wherein the first sensor is configured to detect blue light, and

wherein the second sensor is configured to detect yellow light.

10. The measurement apparatus according to any one of claims 6 to 9, wherein the control unit is configured to detect approach of the oncoming vehicle based on a change in the light receiving result of the second light receiving unit.

11. The measurement apparatus according to claim 10, wherein the control unit is configured to compare a change in the distance calculated based on the light receiving result of the first light receiving unit with a change in the light receiving result of the second light receiving unit.

# FIG. 1

EP 4 478 084 A1

## FIG. 2

NUMBER OF LIGHT RECEIVING ELEMENTS: A

NUMBER OF LIGHT RECEIVING ELEMENTS: B

EP 4 478 084 A1

## FIG. 3A

## FIG. 3B

## FIG. 3C

## FIG. 4

START

RECEIVE, BY SECOND LIGHT RECEIVING UNIT 30, LIGHT HAVING WAVELENGTH DIFFERENT FROM THAT OF MEASUREMENT LIGHT AMONG PIECES OF LIGHT FROM MEASUREMENT AREA ~S101

SET INTENSITY OF MEASUREMENT LIGHT BASED ON LIGHT RECEIVING RESULT ~S102

EMIT MEASUREMENT LIGHT HAVING SET INTENSITY TOWARD MEASUREMENT AREA ~S103

RECEIVE, BY FIRST LIGHT RECEIVING UNIT 20, LIGHT FROM MEASUREMENT AREA ~S104

GENERATE HISTOGRAM ~S105

S106

N-TH TIME?　　NO

YES

CALCULATE TIME OF FLIGHT (TOF) ~S107

CALCULATE DISTANCE TO OBJECT ~S108

END

# FIG. 5

START

RECEIVE, BY SECOND LIGHT RECEIVING UNIT 30, LIGHT HAVING WAVELENGTH DIFFERENT FROM THAT OF MEASUREMENT LIGHT AMONG PIECES OF LIGHT FROM MEASUREMENT AREA — S201

SET INTEGRATION NUMBER OF TIMES n BASED ON LIGHT RECEIVING RESULT — S202

EMIT MEASUREMENT LIGHT TOWARD MEASUREMENT AREA — S203

RECEIVE, BY FIRST LIGHT RECEIVING UNIT 20, LIGHT FROM MEASUREMENT AREA — S204

GENERATE HISTOGRAM — S205

S206

N-TH TIME?  NO

YES

CALCULATE TIME OF FLIGHT (TOF) — S207

CALCULATE DISTANCE TO OBJECT — S208

END

# FIG. 6

START

RECEIVE, BY SECOND LIGHT RECEIVING UNIT 30, LIGHT HAVING WAVELENGTH DIFFERENT FROM THAT OF MEASUREMENT LIGHT AMONG PIECES OF LIGHT FROM MEASUREMENT AREA ～S301

SET THRESHOLD BASED ON LIGHT RECEIVING RESULT ～S302

EMIT MEASUREMENT LIGHT TOWARD MEASUREMENT AREA ～S303

RECEIVE, BY FIRST LIGHT RECEIVING UNIT 20, LIGHT FROM MEASUREMENT AREA ～S304

GENERATE HISTOGRAM ～S305

S306

N-TH TIME? NO

YES

CALCULATE TIME OF FLIGHT (TOF) ～S307

CALCULATE DISTANCE TO OBJECT ～S308

END

# FIG. 7

# FIG. 8

# FIG. 9

START

RECEIVE, BY SECOND LIGHT RECEIVING UNIT 30, LIGHT FROM MEASUREMENT AREA — S401

CALCULATE INTENSITY OF BLUE LIGHT BASED ON DETECTION RESULT OF FIRST SENSOR 32 — S402

CALCULATE INTENSITY OF YELLOW LIGHT BASED ON DETECTION RESULT OF SECOND SENSOR 34 — S403

DETERMINE PRESENCE OR ABSENCE OF ONCOMING VEHICLE BASED ON RATIO BETWEEN INTENSITY OF BLUE LIGHT AND INTENSITY OF YELLOW LIGHT — S404

END

# FIG. 10

START

RECEIVE, BY SECOND LIGHT RECEIVING
UNIT 30, LIGHT FROM MEASUREMENT AREA — S501

DETECT APPROACH OF ONCOMING
VEHICLE BASED ON CHANGE IN LIGHT
RECEIVING RESULT — S502

CALCULATE DISTANCE TO ONCOMING
VEHICLE BASED ON LIGHT RECEIVING
RESULT OF FIRST LIGHT RECEIVING UNIT 20 — S503

COMPARE CHANGE IN CALCULATED
DISTANCE WITH LIGHT RECEIVING RESULT
OF SECOND LIGHT RECEIVING UNIT 30 — S504

END

## INTERNATIONAL SEARCH REPORT

| International application No. |
| --- |
| **PCT/JP2023/003812** |

**A. CLASSIFICATION OF SUBJECT MATTER**

*G01S 7/486*(2020.01)i; *G01C 3/06*(2006.01)i; *G01S 7/484*(2006.01)i; *G01S 17/931*(2020.01)i
FI: G01S7/486; G01S7/484; G01S17/931; G01C3/06 120Q

According to International Patent Classification (IPC) or to both national classification and IPC

**B. FIELDS SEARCHED**

Minimum documentation searched (classification system followed by classification symbols)

G01S7/48-7/51; G01S17/00-17/95; G01C3/06;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2020/0341146 A1 (AEYE, INC.) 29 October 2020 (2020-10-29) paragraphs [0004], [0048]-[0049], [0056], [0058], [0076], fig. 2 | 1-4, 6 |
| Y | paragraphs [0004], [0048]-[0049], [0056], [0058], [0076], fig. 2 | 5, 10-11 |
| Y | JP 2021-152536 A (DENSO CORP) 30 September 2021 (2021-09-30) paragraphs [0027]-[0040], fig. 5-7 | 5 |
| Y | US 2012/0287276 A1 (DWIVEDI, Manoj et al.) 15 November 2012 (2012-11-15) paragraphs [0030]-[0034], fig. 3 | 10-11 |
| A | JP 2021-152469 A (DENSO CORP) 30 September 2021 (2021-09-30) entire text, all drawings | 1-11 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/003812**

| Patent document cited in search report | | | Publication date (day/month/year) | Patent family member(s) | Publication date (day/month/year) |
|---|---|---|---|---|---|
| US | 2020/0341146 | A1 | 29 October 2020 | (Family: none) | |
| JP | 2021-152536 | A | 30 September 2021 | CN 115380222 A<br>paragraphs [0063]-[0076], fig. 5-7 | |
| US | 2012/0287276 | A1 | 15 November 2012 | CN 102779430 A<br>paragraphs [0030]-[0034], fig. 3 | |
| JP | 2021-152469 | A | 30 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021152536 A
- JP 2022018762 A